# EUROPEAN PATENT APPLICATION

(11) **EP 4 582 158 A1**
(43) Date of publication of application: **09.07.2025**
(21) Application number: 24219486.8
(22) Date of filing: 12.12.2024
(51) Int. Cl.: A63F 13/49, A63F 13/47

(54) **VIDEOGAME APPARATUS AND METHOD**

(30) Priority: 05.01.2024 GB 202400143
(71) Applicant: Sony Interactive Entertainment Inc., Tokyo 108-0075 (JP)
(72) Inventor: BARCIAS, Jesus Lucas, London, W1F 7LP (GB); QUIROS, Estefania Rodriguez, London, W1F 7LP (GB)
(74) Representative: D Young & Co LLP

(57) **Abstract**

A method of providing a demo version of a video game comprises the steps of, on a computer, monitoring predefined units of gameplay or 'activities', that start and stop within videogames; receiving a demo file, the demo file identifying a videogame, and one or more activities of that videogame; starting the videogame together with an instruction to begin with at a least a first identified activity; and terminating the videogame once at least a first termination criterion is met; and wherein a termination criterion is that the or each activity identified in the demo file is completed - meanwhile, a method of creating a demo version of a video game, comprises the steps of, on a computer that monitors predefined units of gameplay or 'activities' that start and stop within videogames, receiving one or more user inputs indicating the selection of one or more activities for inclusion in a demo, generating a demo file identifying the video game and the or each activity, and transmitting the demo file to a third party.

## Description

The present invention relates to a videogame apparatus and method.

Conventionally, videogames are designed by videogame developers to provide a predetermined player experience, whether this is a story or adventure, a series of quests, or a multiplayer battle. Separately, some videogames are provided with tools that enable enthusiasts to create new content within a game, or create new levels. In other cases, users can set each other challenges within a game, for example sharing data for a fast race, that a friend can try and beat. Meanwhile, developers can also provide curated experiences, for example in the form of demos for their games.

However, there is scope to provide further means by which to share game experiences with players.

### SUMMARY OF THE INVENTION

Various aspects and features of the present invention are defined in the appended claims and within the text of the accompanying description.

In a first aspect, a method of providing a demo version of a video game is provided in accordance with claim 1.

In another aspect, a method of creating a demo version of a video game is provided in accordance with claim 11.

In another aspect, a computer configured in operation to provide a demo version of a video game is provided in accordance with claim 14.

In another aspect, a computer configured in operation to create a demo version of a video game is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a computer or entertainment system in accordance with embodiments of the present description.
- Figure 2 is a schematic diagram of software components of a computer or entertainment system in accordance with embodiments of the present description.
- Figure 3 is a flow diagram of a method of providing a demo version of a video game in accordance with embodiments of the present description.
- Figure 4 is a flow diagram of a method of creating a demo version of a video game in accordance with embodiments of the present description.

### DESCRIPTION OF THE EMBODIMENTS

A videogame apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

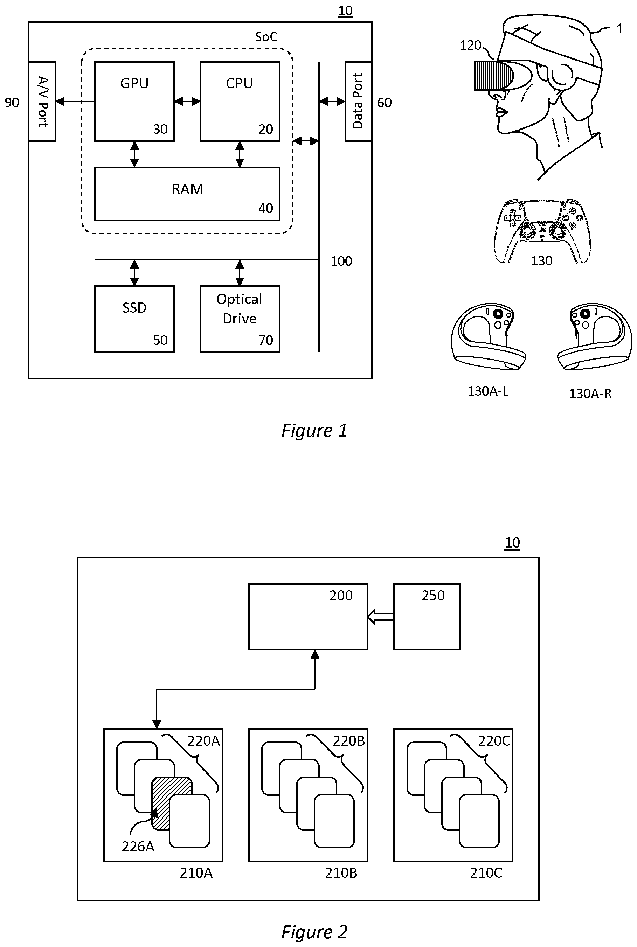

Referring now to the drawings, wherein like reference numerals designate identical or corresponding parts throughout the several views, Figure 1 shows, as an example of an entertainment system 10, a computer or console configured to implement videogame processing according to embodiments of the present description.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70. Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1. Alternatively, the display bay be a television or an integrated display (not shown).

Interaction with the system is typically provided using one or more handheld controllers 130, and/or one or more VR controllers (130A-L,R) in the case of the HMD.

Such an entertainment system can play (e.g. run, display outputs of, and receive inputs for) videogame titles developed by videogame developers.

As noted previously herein, these games are typically complete experiences, optionally modified or added to - if the developer provides support for this to be done.

Meanwhile however, not many games are provided with demo versions; a demo version of a game is typically a partial instance of a game that provides a player with a short, partial experience of the game typically so that the user can evaluate whether they enjoy the experience and want to acquire the full game.

The partial instance can take the form of only part of the game code and/or game assets, or a version of the game code that has been adapted to only run a fixed part of the game. However, providing such a demo represents an additional burden for the developer, due to the need to prepare a modified version of the game to operate as the demo, and also to distribute and provide support for this demo (which is typically free and so can be a net cost to do).

Accordingly in embodiments of the present description, an alternative scheme for generating demos is provided.

Referring now to Figure 2, the entertainment system 10 is provided (for example as part of the OS or a helper app thereof) with a universal data system service (UDS) 200 that games (210A-C) can interact with to define activities. An activity is typically a unit of game play such as a quest, or a level, or a race, the unit depending on the type of game.

To accommodate this, games are structured as one or more activities (220A-C), typically operating sequentially (for example in the case of races) and/or in parallel (for example in the case of quests).

The game notifies the UDS when an activity has been started, and when it ends.

The UDS provides a common schema for defining activities and typically for defining how to notify when activities have started/ended, are when they are available, and also what message to provide to the game to start an activity.

In this latter case, the operating system can provide so-called activity cards; these are provided to the user via a Ul, and each one signifies the start of an activity. If the user selects an activity card, the game is opened at (or changes to) the start point of the activity in the game.

The cards use information provided by the game (or accompanying the game) for the start point of the activity, and typically also a representative image or description for the activity. They may also be associated with relevant help data, such as how-to videos.

Cards may be unlocked as play through the game progresses (e.g. to allow access to activities in the current part of the game, or to revisit earlier activities).

In this way, users can easily and quickly access activities within their games by accessing activity cards through the Ul. One particular benefit of this relates to time management for the user; the time taken to complete an activity can be measured (for example empirically during game testing, or by gathering player telemetry over a cohort of players) to indicate to the user how long the activity might take. Furthermore, the user is immediately transported to the start of the activity, rather than having to navigate to the start of the activity in-game from whatever arbitrary game state they are currently in; this means that the user can evaluate activities and choose one that they can likely complete within the time they have available.

In embodiments of the present description, the activities scheme is re-purposed to provide one or more demos.

In particular, a demo file 250 is produced (for example by the developer, publisher, or a third party) that typically identifies the particular game, and also one or more activities of that game that should form the demo for that game.

Hence in this first instance, the demo file itself may be quite small; it may specify the game title and, for example, one activity from the game, as a demo for the game. This is illustrated in Figure 2 for game 210A and activity 226A. This is simple for a developer, publisher, or third party to produce, given that the game already uses the activities system.

The demo file may be subject to any suitable authorisation scheme, for example being at least partially hashed and having the hash stored by an administrative network of the entertainment system, or of the developer, so that only authorised demos with stored hashes are opened by the operating system of the entertainment device. Similarly a signature may be applied to the demo file, and require authorisation from a trusted source.

This limits the ability of a bad actor to access a free version of the game by creating a false demo file that lists all the game's activities, for example.

When a user selects a demo file (for example selecting it from an online store or a demo section thereof, or receiving it from a friend on the entertainment device network), the operating system (e.g. the UDS) may then optionally verify the demo file as discussed previously herein, for example using a hash, signature, or other suitable verification means, and then open the demo file.

As noted previously, at least in a first instance the demo file will identify the game, and at least one activity of the game.

The operating system then checks to see if the game is already installed on the entertainment device. If the game is already installed, then the operating system opens the game to start at the activity in the demo, in a similar manner to the existing activities system.

The game then starts with the specified activity. As noted previously, the game notifies the OS when an activity ends. In this case, when the OS is running the game in response to a demo file, the end of the activity is treated as a demo termination criterion by the OS, which then closes the game, concluding the demo. Optionally the termination may occur after a brief period of time, for example if the activity ends as soon as a boss enemy dies (as part of an internal scheme of the game), but there is a subsequent animation, cut-scene, or similar that would be relevant to that success; the brief period associated with the activity can be chosen according to how the game proceeds after the activity ends. Further termination criteria or conditions for termination may be included in the demo file itself, as described elsewhere herein

In either case, in this way the operation of the game is restricted to the activity or activities specified in the demo file, whist the game itself operates transparently without any further adaptation being necessary.

Typically, a user will want to play a demo when they don't already have the game installed.

In this case, when the operating system checks to see if the game is already installed on the entertainment device, it will not be found. In this case optionally the operating system may contact a cloud streaming service (for example a service provided on the administrative network of the entertainment system), on which an instance of the game is installed, and which can stream the output of the game to the entertainment device as a remote client. This may be achieved by the entertainment system querying the cloud streaming service using an identifier of the game, and the cloud streaming service linking the entertainment system to a cloud streaming instance. Optionally the demo file may also contain information about a cloud streaming service to contact for this purpose.

Once the entertainment device is linked to the cloud streaming instance it can request that the game opens at or switches to the activity specified in the demo, in a similar manner to when the game is locally installed. The entertainment device then receives audio and video output streamed from the service, and relays player inputs to the service, so that the user can play the demo. Again, when the activity is complete, the OS on the cloud streaming instance of the entertainment device treats this as a demo termination criterion and ends the game. The local client entertainment device can then also inform the player that the demo is over.

Alternatively or in addition to use of a cloud streaming service, when the game is not already installed on the entertainment device, the entertainment device may request to download a copy of the game.

This download may optionally incorporate conditions not normally included with a download, for example including metadata indicating to the OS that the game should not be opened except in response to a demo file, and/or indicating that the game should be listed in a manner making it clear that it is in a demo mode. The download may also have an expiry date, for example being automatically deleted after a day, week, or month, or after the (or each) demo has been run a predetermined number of times (e.g. either each or in total).

Then once the game is downloaded, it may be opened and run as a demo in a similar manner as that described previously herein for when the game was already installed.

In cases where the game supports being played during download (e.g. by downloading game engine code and game assets in blocks that are self-sufficient for parts of the game - typically starting with game menus and initial activities), then optionally the game may be downloaded only up to the point where the activity or activities in the demo have been downloaded. This reduces the time required for the user to wait before playing the demo, and typically also makes it more secure with respect to unauthorised use by not having the whole game installed.

Optionally, the download server may be configured to receive data relating to the activities in the demo, and provide only those parts of the game necessary to enable play of the or each activity in the demo.

This may require an indication of game code and asset dependencies, either in the demo file, or stored at the download server (for example using data provided as part of the process of creating an authorised demo file for distribution).

The above describes a basic demo file in which typically one activity is included. However, it is possible to include multiple activities; for example several races, for a racing game, several levels in a platform game, or several quests within a role playing game. It may also be the case that one unit of game play or chapter (e.g. one story section or thematic section) comprises more than one activity for game-play reasons; for example exploring a ruined castle may comprise two activities, with one starting at the castle entrance and the second starting when a final boss is encountered in the castle; this may be because players want to practice fighting the boss and so having this as a separately startable activity improves the normal player experience; however, in the demo it may be desired that both the castle and boss activities form parts of the same single narrative of completing the exploration of the castle.

Hence in such cases the demo file may identify multiple permitted activities, typically still a first starting activity, and optionally with dependencies on the activities (e.g. confirming that entering the castle is first, but only enabling the boss battle once a quest to find a secret weapon in the castle has been completed).

The demo file may also include multiple termination criteria, or conditional termination criteria. For example, the game might terminate if the user exits the castle (the castle activity ends) or if they beat the boss (the boss activity ends) but might not terminate if the boss beats them (e.g. if the boss activity ends, but indicates a failed outcome) hence termination of the game may optionally depend on a specific exit state of an activity, as specified in the demo file; this may allow the player to try again within the same demo run. The specific termination criteria will be at the demo designer's discretion, within the limitations of what is reported to the OS by the activities UDS system.

The demo may comprise the very first one or more activities within the game (e.g. an introduction or tutorial), but equally may comprise an activity from later on within the game (for example a particularly exciting part of the game, or a section of the game that ends in a so-called 'cliff-hanger').

In this case, normal play of the game may assume that the player's character has acquired certain skills or equipment that are acquired earlier in the game. The activity itself does not necessarily confer these. Therefore, in embodiments of the description, the demo file may also identify (e.g. be associated with, indicate a location, of, or include) data corresponding to a save game (for example in the form of a 'continue game' autosave, or whatever record of the game state the game uses to launch the game with activities in normal use) that provides suitable save data (e.g. character configuration data and any conditional data required by the game, e.g. that the character has sufficient skills/equipment, or has effectively previously discovered a secret code or object in a part of the game not in the demo but essential to an activity in it) so that the game can start transparently with the first activity identified in the demo file. Typically the provided autosave may be a conventional autosave generated by an instance of the game just before the first activity was commenced, so that the can game start without the need for any modification.

In this case, the OS may place the save game in the relevant part of the file system of the game (if previously installed, or partially installed during download) so that the game can start up transparently as if it was being started with an activity card, or (where using a streaming service) may upload it to an instance of the game on the streaming service, or (where this instance is routinely used for this purpose) request that the cloud instance uses a copy of the game save associated with the demo file that is already resident on the streaming server.

In this way, a version of the game state with the required character and game progression to correctly play the demo is used.

It will be appreciated that providing a copy of the game (or even a partial copy), typically for free and that is playable for demo purposes might be open to abuse or inadvertent play outside the expected remit of the demo itself. Consequently, one or more optional remedial steps may be taken.

To reduce the scope for counterfeit demos to provide access to substantial portions of the game, either in a single demo or in a succession of demos, the OS may log which activities are associated with each demo of a particular game. If more than a predetermined number of different activities are identified and started during the play of one or more demos, then the OS may prevent further launching of the game by demo files. The predetermined number may be absolute, or may be based on information about how many activities are actually in the game (the game may report this itself via the UPS, or it may be information accessible from the administrative network of the entertainment device).

This can serve to restrict how much of the game can ever be accessed as a demo on any one entertainment device, regardless of the origin of the demo file or files used.

This approach may also make it possible to allow users to create demos; for example to create a demo for a friend with a message like 'I saw this and thought of you'. In this case the demo may be created for example by pressing a share button or equivalent, and selection a 'share demo' option; up to a predetermined number of activities (e.g. using activity cards) may then be selected by the user to form the demo. The activities may be restricted to ones also available to the user in-game, and/or ones recently played by the user. The user can then share the demo with a friend, who will receive a corresponding demo file as described elsewhere herein.

The recipient friend could play the user defined demo, and perhaps then also an official demo from the developer or publisher, but that would result in the friend having played a threshold number of activities from the game - so if another user sent another demo for a different part of the game to the same friend, the OS on the friend's entertainment device may say to the friend that they have now played the maximum amount of the game allowed in demo mode (but, optionally, can click on a link to the store page to purchase the whole game, or download it if it is part of a subscription package held by the friend).

Meanwhile in some games, for example so-called open-world games, it may be possible to play a significant amount of the game without triggering a termination criterion associated with the activity or activities included in the demo.

Hence for example if the demo included the activity 'beat the dragon', in some games it might be possible to run in the opposite direction from the dragon and subsequently and play a large part of the game without needing to beat the dragon. Clearly this is undesirable for the game developer.

Accordingly, optionally the UDS can also treat notification by the game of the start of an activity not listed in the demo as a termination criterion; this can act as a failsafe as any gameplay that strays far from the intended demo activity or activities will be associated with, and trigger notification of, another activity in the game; hence for example starting a new quest or encountering a new NPC not related to the dragon fight will typically start a new activity, and trigger a termination of the demo. The user could be given the opportunity to return to the intended activity or activities, for example being given 5 minutes to return. If they do not return (or e.g. proceed to access another activity) then the demo is closed.

Optionally the demo file could also specify that all other activities are locked; as noted elsewhere, games typically unlock activities based on progress (e.g. unlocking quest dialogues, new car races, etc.), and so if a user strays from the intended demo activity or activities, they will find most other content of the game inaccessible or unresponsive. This approach requires that games check with the UDS whether an activity is accessible, or use an API for the UDS to make such a setting within the game. Which approach is preferable will typically depend upon the game design; e.g. the extent to which shutting off activities shuts of access to other game content.

Furthermore, the OS can optionally prevent the game from saving some or all game files, for example by instructing it via an API, or for legacy games or to provide transparency sets the save space area of the game as read-only, or intercepts any game save, optionally other than an autosave, and also deletes such autosaves when the demo session is finished and/or when the demo is uninstalled, so as to avoid any problems with a subsequently purchased full version of the game trying to start part way through, and also to limit the ability to unlock or access game content outside the control of the demo scheme.

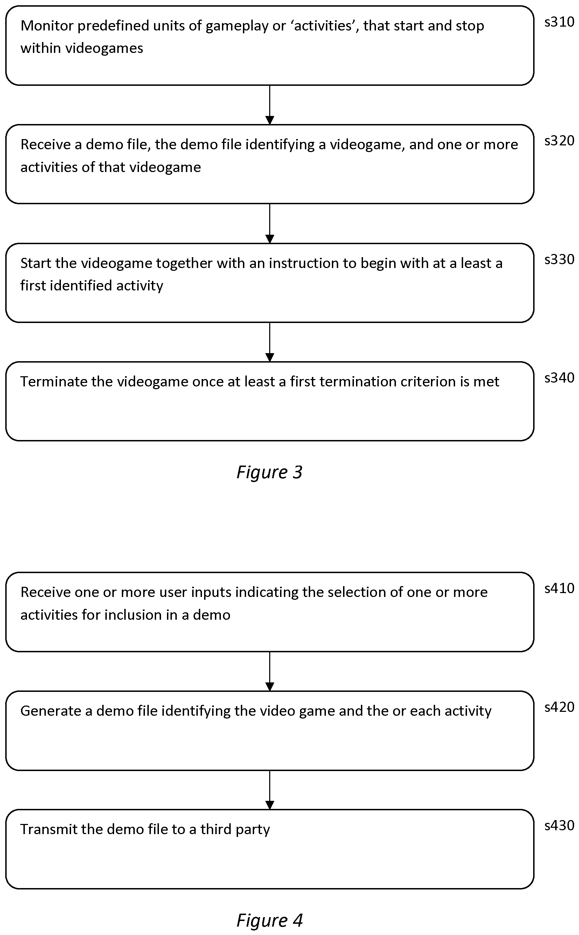

Turning now to Figure 3, in a summary embodiment of the present description, a method of providing a demo version of a video game comprising the following steps.

On a computer (for example entertainment device 10), in a first step s310 monitoring predefined units of gameplay or 'activities', that start and stop within videogames, as described elsewhere herein;

In a second step s320, receiving a demo file, the demo file identifying a videogame, and one or more activities of that videogame, as described elsewhere herein;

In a third step s330, starting the videogame together with an instruction to begin with at a least a first identified activity, as described elsewhere herein; and

In a fourth step s340, terminating the videogame once at least a first termination criterion is met - wherein a termination criterion is that the or each activity identified in the demo file is completed.

It will be apparent to a person skilled in the art that variations in the above method corresponding to operation of the various embodiments of the apparatus as described and claimed herein are considered within the scope of the present invention, including but not limited to that:
- the step of starting the video game comprises contacting a remote server to request that output of the video game, beginning with at a least a first identified activity, is streamed to the computer, as described elsewhere herein;
- the step of starting the video game comprises contacting a remote server to request at least a partial copy of the videogame that encompasses the or each identified activity (e.g. using a conventional online store's delivery mechanisms), as described elsewhere herein;
- the step of starting the video game comprises checking that the videogame is being started only in response to use of a demo file, as described elsewhere herein;
- the demo file identifies an activity for the videogame to start with, and any dependencies or further criteria for starting one or more other activities during play of the videogame; and the method comprises the computer implementing these, as described elsewhere herein;
- the demo file identifies data corresponding to that in a save game file of the videogame which specifies a game state suitable for the activity the video game is started with (for example an auto-save game for the game immediately prior to the start of the activity), and the method comprises the video game using this identified data when starting with the activity (either under specific instruction of the UDS or operating system, or because the data has been placed where the game expects to find a continuation auto-save), as described elsewhere herein;
- the demo file identifies one or more termination criteria comprising one or more selected from the list consisting of the start of an activity of the videogame that is not identified as an activity of the demo within the demo file, a specific exit state of an activity, an ending of a predetermined combination of activities, and a maximum time spent with an activity started, as described elsewhere herein;
- the step of terminating the video game occurs a predetermined period of time after at least a first termination criterion is met, the predetermined period of time being one selected from the list consisting of a default period, and a period specified in the demo file, as described elsewhere herein;
- the method comprises the steps of, on the computer, monitoring the total number of different activities that start and stop within a videogame over time, and preventing starting of the videogame with at a least a first activity if that activity will increase the number of different activities started beyond a threshold amount (e.g. an absolute number, or a proportion of the total activities in the game), as described elsewhere herein; and
- the method comprises the step of, on the computer, preventing the video game from storing any additional save games on the computer that are not necessary to the operation of the demo (whether for the current session or optionally just to resume the demo), as described elsewhere herein.

Similarly, and referring now to Figure 4, in a summary embodiment of the present description method of creating a demo version of a video game, comprising the steps of:
On a computer (e.g. entertainment device 10, or a similar computer such as a console development kit) that monitors predefined units of gameplay or 'activities' that start and stop within videogames,

In a first step s410, receive one or more user inputs indicating the selection of one or more activities for inclusion in a demo (for example, pressing of a 'share' button on a controller, and then selecting a 'Create a demo' option, or pressing the share button in a characteristic manner or pattern to select creating a demo, and then selecting one or more activities for example by selecting unlocked/available activity cards displayed to the user), as described elsewhere herein;

In a second step s420, generating a demo file identifying the video game and the or each activity (for example creating the file in a predetermined format, and implementing any security measures such as hashing, encrypting and/or using a key so that it is only accessible if registered with a trusted repository, or in the case of user generated demo, optionally indicating it is such and optionally using a global secret key for user generate demos, or generating a key or hash that is based at least in part on the creating user's name and optionally conditions of use such as IDs of the activities, the total number of activities allowed, and the like), as described elsewhere herein; and

In a third step S4230, transmitting the demo file to a third party (for example a friend, or an online store or a demo section thereof), as described elsewhere herein.

Again, it will be apparent to a person skilled in the art that variations in the above method corresponding to operation of the various embodiments of the apparatus as described and claimed herein are considered within the scope of the present invention, including but not limited to that the method comprises receiving one or more user inputs indicating one or more selected from the list consisting of:
i. to include one or more termination criteria in the demo file;
ii. to identify in the demo file data corresponding to that in a save game file of the videogame which specifies a game state suitable for the activity the video game will be started with; and
iii. a total number of different activities within the videogame that can be accessed in a demo mode,
as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, and referring again to Figure 1, a computer is configured in operation (for example by suitable software instruction) to provide a demo version of a video game, the computer comprising:
- a monitoring unit (e.g. CPU 20) configured (for example by suitable software instruction) to monitor predefined units of gameplay or 'activities', that start and stop within videogames, as described elsewhere herein;
- an input (e.g. data port 60 in conjunction with CPU 20) configured (for example by suitable software instruction) to receive a demo file, the demo file identifying a videogame and one or more activities of that videogame, as described elsewhere herein;
- a control unit (e.g. CPU 20) configured (for example by suitable software instruction) to start the videogame together with an instruction to begin with at a least a first identified activity, as described elsewhere herein,
- the control unit being configured to terminate the videogame once at least a first termination criterion is met, as described elsewhere herein; and wherein
- a termination criterion is that the or each activity identified in the demo file is completed, as described elsewhere herein.

Instances of this summary embodiment implementing the methods and techniques described herein (for example by use of suitable software instruction) are envisaged within the scope of the application.

Similarly, in a summary embodiment of the present description, and referring again to Figure 1, a computer is configured in operation (for example by suitable software instruction) to create a demo version of a video game, the computer comprising:
- a monitoring unit (e.g. CPU 20) configured (for example by suitable software instruction) to monitor predefined units of gameplay or 'activities', that start and stop within videogames, as described elsewhere herein;
- a user interface unit (e.g. data port 60 in conjunction with CPU 20) configured (for example by suitable software instruction) to receive one or more user inputs indicating the selection of one or more activities for inclusion in a demo, as described elsewhere herein;
- a file generating unit (e.g. SSD 50 in conjunction with CPU 20) configured (for example by suitable software instruction) to generate a demo file identifying the video game and the or each activity, as described elsewhere herein; and
- a transmission unit (e.g. data port 60 in conjunction with CPU 20) configured (for example by suitable software instruction) to transmit the demo file to a third party (e.g. a friend, or an online store), e.g. via a network optionally administered by the producers of the computer, as described elsewhere herein.

Again, instances of this summary embodiment implementing the methods and techniques described herein (for example by use of suitable software instruction) are envisaged within the scope of the application.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of providing a demo version of a video game, comprising the steps of:
on a computer, monitoring predefined units of gameplay or 'activities', that start and stop within videogames;
receiving a demo file, the demo file identifying a videogame, and one or more activities of that videogame;
starting the videogame together with an instruction to begin with at a least a first identified activity; and
terminating the videogame once at least a first termination criterion is met; and wherein
a termination criterion is that the or each activity identified in the demo file is completed.

2. The method of claim 1, in which the step of starting the video game comprises:
contacting a remote server to request that output of the video game, beginning with at a least a first identified activity, is streamed to the computer.

3. The method of claim 1, in which the step of starting the video game comprises:
contacting a remote server to request at least a partial copy of the videogame that encompasses the or each identified activity.

4. The method of any preceding claim, in which the step of starting the video game comprises checking that the videogame is being started only in response to use of a demo file.

5. The method of any preceding claim, in which the demo file identifies an activity for the videogame to start with, and any dependencies or further criteria for starting one or more other activities during play of the videogame; and the method comprises the computer implementing these.

6. The method of any preceding claim, in which the demo file identifies data corresponding to that in a save game file of the videogame which specifies a game state suitable for the activity the video game is started with, and the method comprises the video game using this identified data when starting with the activity.

7. The method of any preceding claim, in which the demo file identifies one or more termination criteria comprising one or more selected from the list consisting of:
i. the start of an activity of the videogame that is not identified as an activity of the demo within the demo file;
ii. a specific exit state of an activity;
iii. an ending of a predetermined combination of activities; and
iv. a maximum time spent with an activity started.

8. The method of any preceding claim, in which the step of terminating the video game occurs a predetermined period of time after at least a first termination criterion is met, the predetermined period of time being one selected from the list consisting of:
i. a default period; and
ii. a period specified in the demo file.

9. The method of any preceding claim, comprising the steps of:
on the computer, monitoring the total number of different activities that start and stop within a videogame over time; and
preventing starting of the videogame with at a least a first activity if that activity will increase the number of different activities started beyond a threshold amount.

10. The method of any preceding claim, comprising the step of:
on the computer, preventing the video game from storing any additional save games on the computer that are not necessary to the operation of the demo.

11. A method of creating a demo version of a video game, comprising the steps of:
on a computer that monitors predefined units of gameplay or 'activities' that start and stop within videogames,
receiving one or more user inputs indicating the selection of one or more activities for inclusion in a demo;
generating a demo file identifying the video game and the or each activity; and
transmitting the demo file to a third party.

12. The method of claim 11, in which the method comprises
receiving one or more user inputs indicating one or more selected from the list consisting of:
i. to include one or more termination criteria in the demo file;
ii. to identify in the demo file data corresponding to that in a save game file of the videogame which specifies a game state suitable for the activity the video game will be started with; and
iii. a total number of different activities within the videogame that can be accessed in a demo mode.

13. A computer program comprising computer executable instructions adapted to cause a computer system to perform the method of any one of the preceding claims.

14. A computer configured in operation to provide a demo version of a video game, the computer comprising:
a monitoring unit configured to monitor predefined units of gameplay or 'activities', that start and stop within videogames;
an input configured to receive a demo file, the demo file identifying a videogame and one or more activities of that videogame;
a control unit configured to start the videogame together with an instruction to begin with at a least a first identified activity,
the control unit being configured to terminate the videogame once at least a first termination criterion is met; and wherein
a termination criterion is that the or each activity identified in the demo file is completed.

15. A computer configured in operation to create a demo version of a video game, the computer comprising:
a monitoring unit configured to monitor predefined units of gameplay or 'activities', that start and stop within videogames;
a user interface unit configured to receive one or more user inputs indicating the selection of one or more activities for inclusion in a demo;
a file generating unit configured to generate a demo file identifying the video game and the or each activity; and
a transmission unit configured to transmit the demo file to a third party.
